# EUROPÄISCHE PATENTSCHRIFT

(11) **EP 1 623 137 B1**
(45) Veröffentlichungstag und Bekanntmachung des Hinweises auf die Patenterteilung: **19.11.2008**
(21) Anmeldenummer: 04731149.3
(22) Anmeldetag: 05.05.2004
(51) Int. Cl.: F16D 65/14

(54) **FAHRZEUGBREMSE UND VERFAHREN ZUM BETÄTIGEN EINER FAHRZEUGBRE MSE**
VEHICLE BRAKE AND METHOD FOR ACTUATING A VEHICLE BRAKE
FREIN AUTOMOBILE ET PROCEDE D'ACTIONNEMENT D'UN FREIN AUTOMOBILE

(30) Priorität: 09.05.2003 DE 10320884
(43) Veröffentlichungstag der Anmeldung: 08.02.2006
(73) Patentinhaber: Lucas Automotive GmbH, 56070 Koblenz (DE)
(72) Erfinder: DANNE, Ulrich, 56170 Bendorf (DE); GILLES, Leo, 56077 Koblenz (DE)
(74) Vertreter: Thum, Bernhard
(86) Internationale Anmeldenummer: PCT/EP2004/004770
(87) Internationale Veröffentlichungsnummer: WO 2004/099644

(56) Entgegenhaltungen:
- EP-A- 1 203 895
- EP-A- 1 291 541
- DE-A- 19 851 670
- DE-A- 19 945 543
- US-B1- 6 405 836

## Beschreibung

### Technisches Gebiet der Erfindung

Die Erfindung betrifft eine Fahrzeugbremse mit einem Gehäuse, einem in dem Gehäuse aufgenommenen Bremskolben, an dem ein Bremsbelag angebracht ist, und einer Blockiereinrichtung, wobei der Bremskolben in dem Gehäuse über eine Betätigungseinrichtung verlagerbar ist und wobei der Bremskolben vermittels der Blockiereinrichtung bezüglich des Gehäuses arretierbar ist.

### Stand der Technik

Eine derartige Fahrzeugbremse ist aus dem Dokument DE19945543 bekannt.

Eine derartige Fahrzeugbremse ist auch aus dem europäischen Patent EP 0 551 397 bekannt. Bei dieser Fahrzeugbremse wird ein Bremskolben in einer Betriebsbremssituation, das heißt dann, wenn eine mit einem Fahrzeugrad gekoppelte Bremsscheibe zur Abbremsung des Fahrzeugrades abgebremst werden soll, durch Zuführen von Hydraulikfluid in die Fluidkammer relativ zu dem Gehäuse verlagert und gegen die Bremsscheibe gedrückt. Die dabei auf die Bremsscheibe ausgeübte Bremskraft ist abhängig von der Größe des in der Fluidkammer herrschenden Hydraulikdrucks. Nach Beendigung der Betriebsbremssituation wird Hydraulikfluid aus der Fluidkammer abgeführt, so dass sich der Bremskolben mit seinem Bremsbelag wieder von der Bremsscheibe entfernen und diese freigeben kann. In einer Feststellbremssituation, in welcher ein mit einer derartigen Bremse ausgestattetes Fahrzeug gegen ein unbeabsichtigtes Wegrollen gesichert werden soll, indem die ruhende Bremsscheibe gegen ein unbeabsichtigtes Rotieren festgeklemmt wird, wird bei dieser Fahrzeugbremse zunächst wieder der Bremskolben durch Zuführen von Hydraulikfluid in die Fluidkammer auf die Bremsscheibe zugestellt und an diese angepresst. Sodann wird eine Blockierstange motorisch angetrieben innerhalb des Gehäuses verlagert und mit dem Bremskolben in Kontakt gebracht. Die Blockierstange ist über eine selbsthemmende Gewindepaarung in dem Gehäuse gelagert. Dadurch kann erreicht werden, dass die Blockierstange bei Einwirken von Axialkräften in ihrer Axialposition blockiert wird. Dieser Effekt wird dazu genutzt, den Bremskolben in seiner zugespannten Position zu blockieren. Nach Kontaktieren des Bremskolbens durch die Blockierstange kann Hydraulikfluid aus der Fluidkammer abgeführt werden, wobei die Blockierstange den Bremskolben in seiner Bremsstellung hält. Der Hydraulikfluidkreis ist somit entlastet und die Feststellbremsfunktion der Fahrzeugbremse aktiviert. Zum Lösen der Feststellbremsfunktion wird die Fluidkammer erneut mit Hydraulikfluid gefüllt, bis der darin herrschende Hydraulikdruck ausreichend groß ist, dass der Bremskolben die Blockierstange freigibt. Diese kann sodann mechanisch in ihre Ausgangsstellung verlagert werden. Anschließend wird das Hydraulikfluid aus der Fluidkammer abgeführt, so dass der Bremskolben wieder seine bremswirkungsfreie Ausgangsposition einnehmen kann. Zur Verlagerung der Betätigungsstange ist nach diesem Patent ein elektromotorischer Antrieb erforderlich, wodurch die gesamte Anordnung einen verhältnismäßig aufwendigen Aufbau aufweist. Darüber hinaus wird durch den erforderlichen Elektromotor das Bordnetz eines Kraftfahrzeugs zusätzlich belastet.

### Aufgabe und erfindungsgemäße Lösung

Es ist Aufgabe der vorliegenden Erfindung, eine Fahrzeugbremse der eingangs bezeichneten Art bereitzustellen, welche bei einfachem und kompaktem Aufbau eine schnelle und zuverlässige Aktivierung der Feststellbremsfunktion ermöglicht.

Die Aufgabe der Erfindung wird durch die Merkmale des Anspruchs 1 gelöst.

Diese Aufgabe wird bei einer Fahrzeugbremse der eingangs bezeichneten Art dadurch gelöst, dass die Blockiereinrichtung eine elektromechanische Verrastungsanordnung aufweist, welche derart betätigbar ist, dass sie in einer Verrastungsstellung eine Verlagerung des Bremskolbens innerhalb des Gehäuses blockiert und in einer Freigabestellung den Bremskolben für eine Bewegung in dem Gehäuse freigibt.

Somit ist es möglich die herkömmlichen Maßnahmen zur Aktivierung einer Betriebsbremsfunktion, bei welcher der Bremskolben innerhalb des Gehäuses verlagert wird, auch zur Aktivierung der Feststellbremsfunktion zu nutzen. Ist der Bremskolben derart auf eine Bremsscheibe der Fahrzeugbremse zugestellt und wird an diese angedrückt, so kann dann die Verrastungsanordnung aktiviert werden, mit welcher der Bremskolben in dem Gehäuse blockiert und an seiner gegenwärtig zugestellten Position arretiert wird.

Hinsichtlich der konstruktiven Ausgestaltung der Verrastungsanordnung kann vorgesehen sein, dass diese eine Rastelementanordnung mit wenigstens einem zwischen einer der Verriegelungsstellung zugeordneten Rastelementposition und einer der Freigabestellung zugeordneten Rastelementposition verlagerbaren Rastelement aufweist, das durch selbsthemmenden Eingriff mit einer Rastelement-Angriffsfläche einer mit dem Bremskolben antriebsmäßig gekoppelten Gegenrastkomponente verrastbar ist. Zum Herbeiführen einer definierten Lage im unbelasteten Zustand, ist das wenigstens eine Rastelement in seine der Freigabestellung zugeordnete Rastelementposition über ein Federelement vorgespannt. Zur Betätigung der Verrastungsanordnung kann das wenigstens eine Rastelement über einen elektromechanischen Aktuator zwischen seiner der Verriegelungsstellung zugeordneten Rastelementposition und seiner der Freigabestellung zugeordneten Rastelementposition verlagerbar sein.

Eine vorteilhafte Weiterbildung der Erfindung sieht vor, dass zwei Rastelemente über den elektromechanischen Aktuator betätigbar sind, wobei der Abstand zwischen den Rastelementen und die Teilung der mit einer Mehrzahl von Rastelement-Angriffsflächen ausgebildeten Gegenrastkomponente derart aufeinander abgestimmt sind, dass in der Verriegelungsstellung lediglich eines der Rastelemente mit einer der Rastelement-Angriffsflächen in selbsthemmendem Eingriff steht und das jeweils andere Rastelement dabei zwischen zwei benachbarte Rastelement-Angriffsflächen selbsthemmungsfrei eingreift. Dadurch kann eine Verdopplung der Raststufen, d.h. eine Verfeinerung der Abstände einzelner Rastpositionen erzielt werden.

In einer Ausführungsform der Erfindung kann vorgesehen sein, dass das wenigstens eine Rastelement von einer Sperrklinke gebildet ist und dass die Rastelement-Angriffsflächen der Gegenrastkomponente als Rastverzahnung ausgebildet sind. Alternativ dazu können das wenigstens eine Rastelement von einem Rastzapfen gebildet sein und Rastelement-Angriffsflächen der Gegenrastkomponente als Rastzapfenausnehmungen ausgebildet sein.

Zur antriebsmäßigen Kopplung von Bremskolben und Gegenrastkomponente sieht eine Ausführungsvariante der Erfindung vor, dass der Bremskolben mit einem Blockierelement der Blockiereinrichtung über eine selbstlösende Gewindepaarung gekoppelt ist. Dabei kann die selbstlösende Gewindepaarung von einem Außengewinde, das an einem an dem Bremskolben befestigten Gewindebolzen vorgesehen ist, und einem Innengewinde gebildet sein, das an einer an dem Blockierelement befestigten Aufnahmebuchse vorgesehen ist. Alternativ hierzu kann in einer weiteren Ausführungsvariante der Erfindung vorgesehen sein, dass die selbstlösende Gewindepaarung von einem an dem Bremskolben vorgesehenen Innengewinde und einem an dem Blockierelement vorgesehenen Außengewinde gebildet ist.

Zu Reduzierung der an der Verrastungsanordnung auftretenden Kräfte sieht eine Weiterbildung de Erfindung vor, dass das Blockierelement über eine Getriebeeinrichtung, insbesondere ein Planetengetriebe, mit der Gegenrastkomponente antriebsmäßig gekoppelt ist. Dabei kann vorgesehen sein, dass das Blockierelement mit einem Sonnenrad des Planetengetriebes drehfest gekoppelt ist, dass ferner die Gegenrastkomponente mit einem Planetenradträger des Planentengetriebes drehfest gekoppelt ist und dass das Hohlrad des Planentengetriebes in dem Gehäuse ausgebildet oder mit diesem drehfest gekoppelt ist. Alternativ hierzu kann vorgesehen sein, dass das Blockierelement mit einem Planetenradträger des Planetengetriebes drehfest gekoppelt ist, dass ferner die Gegenrastkomponente mit einem Sonnenrad des Planentengetriebes drehfest gekoppelt ist und dass das Hohlrad des Planentengetriebes in dem Gehäuse ausgebildet oder mit diesem drehfest gekoppelt ist. Zur weiteren Reduzierung der an der Verrastungsanordnung auftretenden Kräfte kann vorgesehen sein, dass das Planetengetriebe mehrstufig ausgebildet ist.

Die Betätigungseinrichtung kann hydraulisch ausgebildet sein, wobei der Bremskolben mit dem Gehäuse eine Fluidkammer begrenzt, welche über einen Hydraulikfluidkreis mit Hydraulikfluid beschickbar ist, so dass der Bremskolben zur Betätigung der Fahrzeugbremse hydraulisch innerhalb des Gehäuses entlang einer Kolbenlängsachse verlagerbar ist. Gleichermaßen ist es bei einer erfindungsgemäßen Ausführungsform möglich, dass die Betätigungseinrichtung elektromechanisch ausgebildet ist, wobei der Bremskolben zur Betätigung der Fahrzeugbremse durch Ansteuerung eines Elektromotors innerhalb des Gehäuses entlang einer Kolbenlängsachse verlagerbar ist.

Zur drehbaren Lagerung des Blockierelements in dem Gehäuse kann eine Radiallageranordnung oder/und Axiallageranordnung vorgesehen sein.

Für den Betrieb der erfindungsgemäßen Fahrzeugbremse kann vorgesehen sein, dass in einer Betriebsbremssituation der Bremskolben durch Aktivieren der Betätigungseinrichtung innerhalb des Gehäuses verlagerbar ist und dass in einer Parkbremssituation zunächst der Bremskolben durch Ansteuern der Betätigungseinrichtung innerhalb des Gehäuses verlagert wird, sodann die Blockiereinrichtung betätigt wird und der Bremskolben innerhalb des Gehäuses blockiert wird und schließlich die Betätigungseinrichtung deaktiviert wird. Zum Auflösen der Parkbremssituation kann dann die Betätigungseinrichtung wieder aktiviert werden, bis das Blockierelement den Bremskolben freigibt und schließlich der Bremskolben in seine bremswirkungsfreie Ausgangsstellung zurückgeführt wird.

Die Erfindung betrifft ferner ein Verfahren zum Betätigen einer Fahrzeugbremse der vorstehend beschriebenen Art, bei welchem in einer Betriebsbremssituation der Bremskolben durch Aktivieren der Betätigungseinrichtung innerhalb des Gehäuses verlagerbar ist und dass in einer Parkbremssituation zunächst der Bremskolben durch Ansteuern der Betätigungseinrichtung innerhalb des Gehäuses verlagert wird, sodann die Blockiereinrichtung betätigt wird und der Bremskolben innerhalb des Gehäuses blockiert wird und schließlich die Betätigungseinrichtung deaktiviert wird. Bei diesem erfindungsgemäßen Verfahren kann ferner vorgesehen sein, dass zum Auflösen der Parkbremssituation die Betätigungseinrichtung aktiviert wird, bis das Blockierelement den Bremskolben freigibt und schließlich der Bremskolben in seine bremswirkungsfreie Ausgangsstellung zurückgeführt wird.

### Kurze Beschreibung der Zeichnungen

Im Folgenden wird die Erfindung beispielhaft anhand der beiliegenden Figuren erläutert. Es stellen dar:
- Fig. 1: einen schematischen Längsschnitt durch eine erste Ausführungsform der erfindungsgemäßen Fahrzeugbremse;
- Fig. 2: einen schematischen Längsschnitt durch eine zweite Ausführungsform der erfindungsgemäßen Fahrzeugbremse;
- Fig. 3: einen schematischen Längsschnitt durch eine dritte Ausführungsform der erfindungsgemäßen Fahrzeugbremse;
- Fig. 4: eine Detaildraufsicht gemäß Pfeil IV aus Fig. 3;
- Fig. 5: einen schematischen Längsschnitt durch eine vierte Ausführungsform der erfindungsgemäßen Fahrzeugbremse;
- Fig. 6: einen achsorthogonalen Schnitt entlang der Schnittlinie VI aus Fig. 5;
- Fig. 7: einen achsorthogonalen Schnitt entlang der Schnittlinie VII aus Fig. 5;
- Fig. 8: eine Detailansicht einer Verrastungsanordnung für die erfindungsgemäßen Fahrzeugbremse;
- Fig. 9: eine Detailansicht einer alternativen Verrastungsanordnung für die erfindungsgemäßen Fahrzeugbremse und
- Fig. 10: eine schematische Darstellung des Druckverlaufs und des Klemmkraftverlaufs bei der Fahrzeugbremse gemäß Fig. 2 bis 9.

### Beschreibung bevorzugter Ausführungsbeispiele

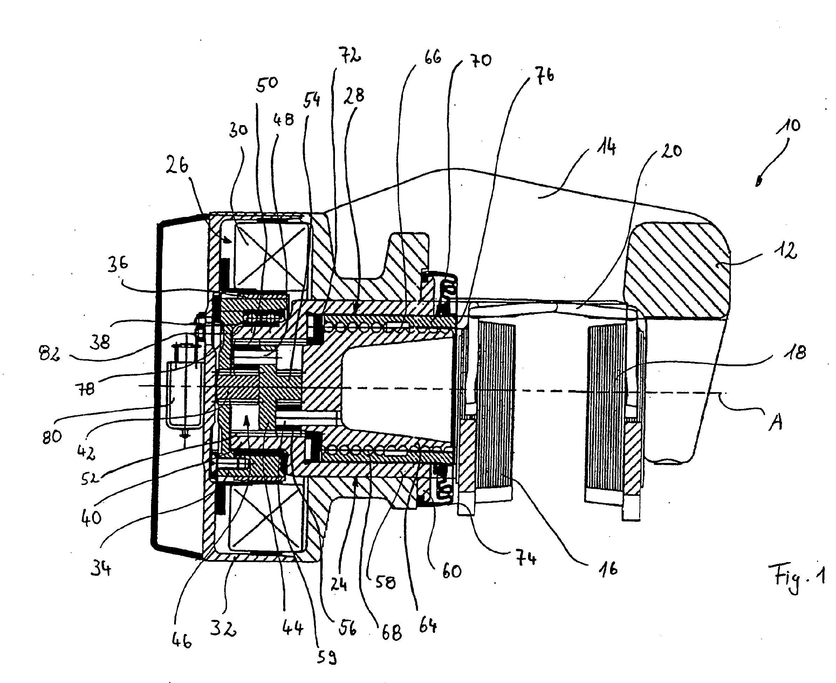

In Figur 1 ist ein erstes Ausführungsbeispiel einer erfindungsgemäßen Fahrzeugbremse im Längsschnitt gezeigt und allgemein mit 10 bezeichnet. Die Fahrzeugbremse 10 wird, wie nachfolgend noch im Detail erläutert wird, elektromechanisch betätigt. Sie ist als Scheibenbremse des Schwimmsatteltyps ausgebildet. Hierzu umfasst die Fahrzeugbremse 10 ein Gehäuse 12 mit einem Schwimmsattelbereich 14. In dem Schwimmsattelbereich 14 sind ein erster Bremsbelag 16 und ein zweiter Bremsbelag 18 angeordnet. Die beiden Bremsbeläge 16 und 18 sind über eine Lüftspielfeder 20 federnd miteinander verbunden, wobei die Lüftspielfeder 20 versucht, die beiden Bremsbeläge 16 und 18 auseinander zu drängen. Zwischen den beiden Bremsbelägen 16 und 18 ist eine Bremsscheibe (nicht gezeigt) aufgenommen, welche an ihrem radial innenliegenden Bereich mit einem ebenfalls nicht gezeigten abzubremsenden Fahrzeugrad gekoppelt ist. Der Bremsbelag 18 ist an dem Schwimmsattelbereich 14 des Gehäuses 12 in Richtung der Längsachse A verschiebbar angebracht. Gegenüberliegend ist der Bremsbelag 16 in Richtung der Längsachse A verschiebbar gelagert.

Die Verschiebung des Bremsbelags 16 in Richtung der Längsachse A erfolgt über einen elektrisch betätigbaren Aktuator 24. Der elektrisch betätigbare Aktuator 24 umfasst einen Elektromotor 26 und eine sebstlösende Spindel-Mutter-Getriebeanordnung 28. Der Elektromotor 26 ist als Innenläufermotor ausgebildet. Er umfasst einen Stator 30, der in einem an dem Gehäuse 12 befestigten Gehäusedeckel 32 aufgenommen ist. Radial innerhalb des Stators 30 befindet sich ein Rotor 34, der an seiner radial äußeren Umfangsfläche Permanentmagnete 36 aufweist, durch welche er in dem bei Bestromung des Stators aufgebauten Magnetfeld mechanisch angetrieben wird. Der Rotor 34 ist über eine Lageranordnung 38 auf einem Axialfortsatz 40 einer in dem Gehäuse 12 festgelegten Lagerbuchse 58 und damit relativ zu dem Gehäuse 12 um die Achse A drehbar gelagert. In seinem radial inneren Bereich ist der Rotor 34 mit einem außenverzahnten Bolzen 42 drehfest gekoppelt. Dieser erstreckt sich in axialer Richtung zentral zu einem Planetenträger 44 eines Planetengetriebes 46 hin.

Der Planetenträger 44 hält über Lagerbolzen 48 Planetenräder 50, wobei sich die Rotationsachsen der Lagerbolzen 48 parallel zu der Längsachse A erstrecken. Die Planetenräder 50 stehen an ihrem bezüglich der Längsachse A radial inneren Bereich mit dem außenverzahnten Bolzen 42 in Eingriff. In ihrem bezüglich der Längsachse A radial äußeren Bereich stehen die Planetenräder 50 mit einer Hohlradverzahnung 52 in Eingriff, die an dem Axialfortsatz der Lagerbuchse 58 ausgebildet ist. Die Lagerbuchse 58 besitzt an ihrem von der Innenverzahnung 52 entfernten Ende einen Flanschabschnitt 60, mit welchem sie sich in axialer Richtung an dem Gehäuse abstützt.

Der Planetenträger 44 weist auf seiner in Fig. 1 rechten Seite einen bolzenförmigen Axialfortsatz 54 auf, der mit einer Außenverzahnung versehen ist. Mit dieser Außenverzahnung stehen weitere Planetenräder 56 in Eingriff, die ferner mit der Hohlradverzahnung 52 der Lagerbuchse 58 kämmen. Die Planetenräder 56 sind mittels Lagerbolzen 59 drehbar an der Rückseite einer Spindel 64 gelagert.

Die Spindel 64 weist an ihrer Außenumfangsfläche eine um die Achse A spiralförmig herumlaufende Führungsbahn 66 auf, in welcher kugelförmige Lagerkörper 68 geführt sind. Die Spindel 64 wird von einer Mutter 70 umgriffen, welche ebenfalls an ihrer Innenseite zumindest bereichsweise eine korrespondierend spiralförmige Führungsbahn aufweist, in welche ebenfalls die Lagerkörper 68 eingreifen. Die Spindel 64, die Lagerkörper 68 und die Mutter 70 bilden die selbstlösende Spindel-Mutter-Getriebeanordnung 28.

Die Spindel 64 ist über eine Gleitlageranordnung 72 in der Lagerbuchse 58 gelagert. Ferner führt die Lagerbuchse 58 die Mutter 70 in Richtung der Achse A und verhindert ein Verkanten derselben. An dem Flanschabschnitt 60 der Lagerbuchse 58 ist ein flexibler Faltenbalg 74 vorgesehen, welcher dichtend mit einem auf der Mutter 70 angebrachten Deckel 76 zusammenwirkt.

Der Rotor 34 ist an seinem in Fig. 1 linken Bereich mit einer Stirnverzahnung 78 versehen. Über einen elektrisch ansteuerbaren Hubmagneten 80 lässt sich ein Verriegelungselement 82 in Eingriff mit der Stirnverzahnung 78 bringen, so dass der Rotor 34 gegen eine Drehung um die Längsachse A gesichert ist. Das Verriegelungselement 82 und der Hubmagnet 80 sind in eine Freigabestellung vorgespannt, in welcher sie eine Drehung des Rotors 34 zulassen. Durch Bestromen des Hubmagneten 80 verschiebt dieser das Verriegelungselement 82 in eine Verrastungsstellung, in welcher dieses den Rotor 34 blockiert. Der Eingriff des Verriegelungselements 82 in die Stirnverzahnung 78 ist selbsthemmend, d.h. er lässt sich nur durch eine einwirkende Axialkraft lösen.

Die Fahrzeugbremse 10 gemäß Figur 1 funktioniert im Falle einer Betriebsbremssituation, in welcher eine rotierende Bremsscheibe abgebremst werden soll, wie folgt. Bei Bestromung des Elektromotors 26 dreht sich der Rotor 34 um die Achse A reibungsarm, bedingt durch die Lageranordnung 38. Durch die Drehung des Rotors 34 wird zunächst der Bolzen 42 und mit diesem die Planetenräder 50 angetrieben. Diese wälzen in der Innenverzahnung 52 der als feststehendes Hohlrad wirkenden Lagerbuchse 58 ab, so dass sich der Planetenträger 44 um die Achse A dreht, jedoch mit einer von der Drehzahl des Rotors 34 abweichenden Drehzahl. Die Drehung des Planetenträgers 44 wird über den Axialfortsatz 54 und die Planetenräder 56, welche ebenfalls in der Innenverzahnung 52 der als feststehendes Hohlrad wirkenden Lagerbuchse 58 abwälzen, auf die Spindel 64 übertragen. Diese dreht sich innerhalb der Lagerbuchse 58 reibungsarm. Aufgrund der Drehung der Spindel 64 wird die in der Lagerbuchse 58 linear geführte Mutter 70 in Richtung der Längsachse A verschoben. Dies bedeutet, dass die Mutter 70 sich in Richtung der Längsachse A bedingt durch die beiden Führungsbahnen der Spindel 64 und der Mutter 70 unter Vermittlung der Lagerkörper 68 in axialer Richtung verlagert und dadurch über den Deckel 76 auf den Bremsbelag 16 drückt. Die Bremsbeläge 16 und 18 wirken durch diese Druckkraft schwimmend auf die Bremsscheibe 22 und greifen an dieser beidseitig an, so dass diese aufgrund der dabei entstehenden Reibwirkung abgebremst wird. Soll diese Bremswirkung reduziert oder aufgehoben werden, so wird der Elektromotor 26 nicht weiter bestromt oder gar mit gegengerichteter Polung bestromt. Dies führt zu einer reversiblen Bewegung der Mutter 70 auf der Spindel 64.

Im Falle einer Feststellbremssituation, in welcher eine ruhende Bremsscheibe gegen eine unbeabsichtigte Drehung gesichert werden soll, werden die Bremsbeläge 16 und 18 zunächst gegen die nicht gezeigte Bremsscheibe gedrückt. Dies geschieht durch Bestromen des Elektromotors 26, wie für die Betriebsbremssituation vorstehend erläutert. Ist eine hinreichend hohe Klemmkraft an der Bremsscheibe erreicht, so wird der Hubmagnet 80 aktiviert. Dieser schiebt das Verriegelungselement 82 in seine Verrastungsstellung, so dass der Rotor 34 drehblockiert wird. Dadurch ist eine Rüchstellbewegung des Bremskolbens 14 und damit der Bremsbeläge 16 und 18 blockiert. Die Fahrzeugbremse 10 verharrt in ihrer zugespannten Position, ohne dass der Elektromotor 26 weiter bestromt werden muss. Durch die Wirkung des zweistufigen Planetengetriebes 46, kann die auf das Verriegelungselement wirkende Umfangskraft klein gehalten werden. Zum Lösen der Feststellbremssituation wird der Hubmagnet 80 angesteuert, so dass dieser das Verriegelungselement 82 wieder aus seiner Verrastungsstellung herauszieht. Sodann kann sich die Fahrzeugbremse in ihre in Fig. 1 gezeigte Ausgangsstellung zurück bewegen.

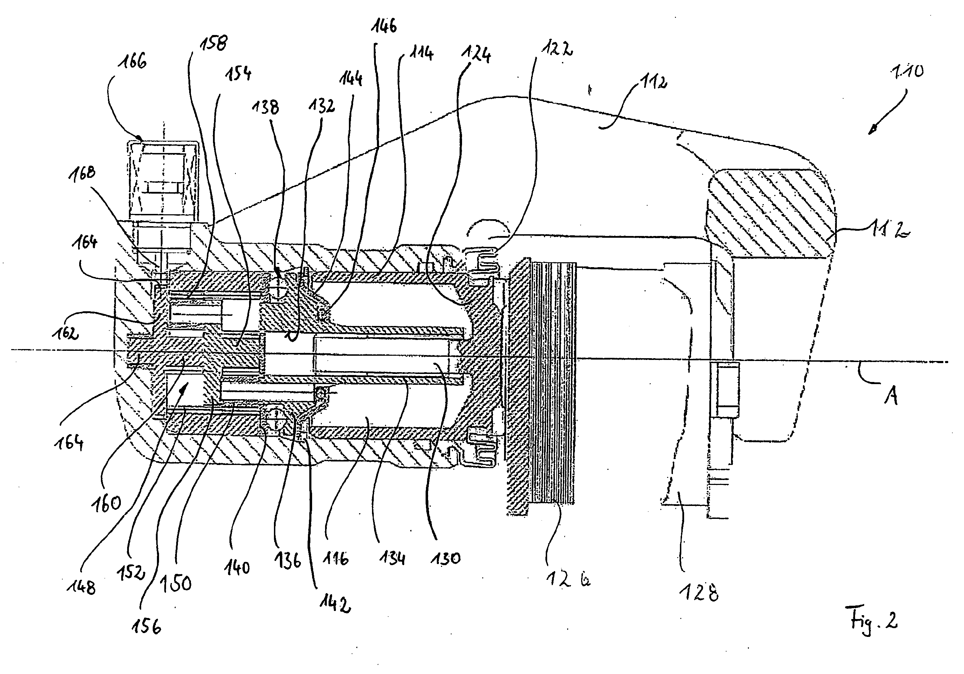

In Fig. 2 ist ein zweites Ausführungsbeispiel einer erfindungsgemäße Fahrzeugbremse allgemein mit 110 bezeichnet. Diese umfasst ein Gehäuse 112, in welchem ein Bremskolben 114 in Richtung einer Kolbenlängsachse A verlagerbar geführt ist. Der Bremskolben 114 schließt mit dem Gehäuse 112 eine Fluidkammer 116 ein, die über eine nicht gezeigte Hydraulikfluidleitung eines Hydraulikfluidkreises mit Hydraulikfluid beschickbar ist bzw. entleerbar ist. Der in dem Gehäuse 112 geführte Bremskolben 114 ist über einen Faltenbalg 122 an seinem in Fig. 2 rechten stirnseitigen Ende mit dem Gehäuse 112 verbunden, so dass das Gehäuseinnere gegen ein Eindringen von Schmutz abgeschirmt ist. An dem Stirnende 124 des Bremskolbens 114 ist ein Bremsbelag 126 angeordnet, der in dem Gehäuse 112 verschiebbar ist. Dem Bremsbelag 126 gegenüberliegend ist ein zweiter Bremsbelag 128 angeordnet, der ebenfalls in dem Gehäuse 112 verlagerbar ist. Die Bremsbeläge 126 und 128 sind gemäß einer herkömmlichen Schwimmsattelanordnung in dem Gehäuse 112 gelagert, so dass sich dann wenn der Bremsbelag 126 über den Bremskolben 114 verlagert wird, der Bremsbelag 128 gleichermaßen, jedoch in entgegengesetzter Richtung verlagert. Dadurch ist es möglich eine nicht gezeigte zwischen den Bremsbelägen 126 und 128 angeordnete rotierende Bremsscheibe zwischen den Bremsbelägen 126 und 128 einzuklemmen und somit abzubremsen.

An dem Bremskolben 114 ist in seinem radial inneren Bereich ein Gewindebolzen 130 angeordnet. Der Gewindebolzen 130 ist mit seinem Außengewinde in einer Aufnahmegewindebohrung 132 eines Schaftabschnitts eines Blockierelements 134 aufgenommen. Das Innengewinde der Aufnahmegewindebohrung 132 in dem Blockierelement 134 bildet zusammen mit dem Außengewinde des Gewindebolzens 130 eine selbstlösende Gewindepaarung.

Das Blockierelement 134 weist ferner einen Flansch 136 auf, der sich radial nach außen erstreckt. Über den Flansch 136 stützt sich das Blockierelement 134 über ein Axiallager 138 an einer Schulter 140 des Gehäuses 112 in axialer Richtung in Fig. 2 nach links ab. Auf der dem Axiallager 138 abgewandten Seite des Flanschs 136 ist in dem Gehäuse 112 über einen in dem Gehäuse 112 festgelegten Sicherungsring 142 ein tellerförmiges Federblech 144 angebracht. Zwischen dem Federblech 144 und dem Flansch 132 ist ein weiteres Axiallager 146 angeordnet, welches radial innerhalb des Bereichs liegt, mit welchem sich das Federblech 144 an dem Gehäuse 112 über den Sicherungsring 142 abstützt.

An seiner von dem Bremskolben 14 abgewandten Seite ist das Blockierelement 134 mit einem Planetengetriebe 148 gekoppelt, das ähnlich dem Planetengetriebe 46 aus Fig. 1 ausgebildet ist. Das Planetengetriebe 148 weist an dem Blockierelement 134 drehbar gelagerte Planetenräder 150, die bezüglich der Längsachse A radial außen in eine gehäusefeste Hohlradverzahnung 152 eingreifen und die bezüglich der Längsachse A radial innen mit einem Sonnenrad 154 kämmen. Dass Sonnenrad 154 ist an einem Planetenradträger 156 drehfest ausgebildet. An dem Planetenradträger 156 sind weitere Planetenräder 158 drehbar gelagert, die bezüglich der Längsachse A radial außen in die gehäusefeste Hohlradverzahnung 152 eingreifen und die bezüglich der Längsachse A radial innen mit einem Sonnenrad 160 kämmen. Dass Sonnenrad 160 ist an einer über einen Lagerbolzen 164 drehbar in dem Gehäuse 112 gelagerten Rastscheibe 162 drehfest ausgebildet. Die Rastscheibe weist an ihrer radialen Umfangsfläche eine Rastverzahnung 164 auf. In dem Gehäuse 112 ist ein elektrisch ansteuerbarer Hubmagnet 166 vorgesehen, der einen Rastzapfen 168 aufweist. Der Rastzapfen 168 kann gegen eine Federvorspannung in selbsthemmenden Eingriff mit der Rastverzahnung 164 gebracht werden.

Im Folgenden soll der Betrieb der erfindungsgemäßen Fahrzeugbremse 110 gemäß Figur 2 näher erläutert werden.

In einer Betriebsbremssituation, in welcher eine zwischen den Bremsbelägen 126 und 128 angeordnete nicht gezeigte rotierende Bremsscheibe abgebremst werden soll, wird die Fluidkammer 116 über die Hydraulikfluidleitung von dem Hydraulikfluidkreis mit Hydraulikfluid beschickt, so dass sich der Bremskolben 114 in Fig. 2 entlang der Kolbenlängsachse A verlagert. Dabei werden die Bremsbeläge 126 und 128 beidseitig auf die nicht gezeigte Bremsscheibe gedrückt und diese entsprechend gebremst. Zum Aufheben der Bremswirkung wird über die Fluidleitung Hydraulikfluid aus der Fluidkammer 116 abgeführt.

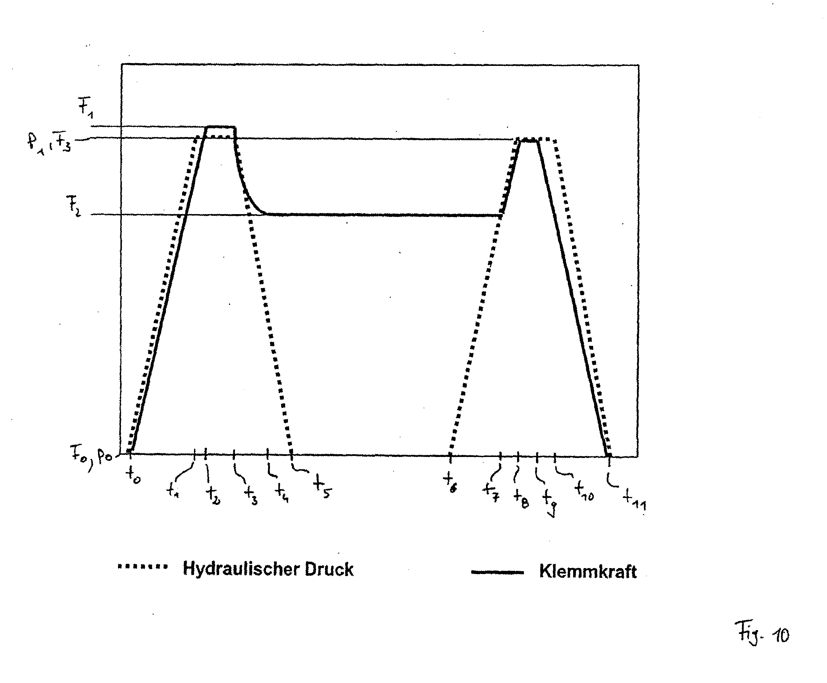

Zur Erläuterung einer Feststellbremssituation, in welcher die zwischen den Bremsbelägen 126 und 128 angeordnete nicht gezeigte Bremsscheibe stillsteht und gegen eine unbeabsichtigte Drehung gesichert werden soll, wird zusätzlich auf Fig. 10 Bezug genommen.

In der Feststellbremssituation wird zum Zeitpunkt t₀ die Fluidkammer 116 über die Fluidleitung von dem Hydraulikfluidkreis mit Hydraulikfluid beschickt. Dadurch wird der Bremskolben 114 in Fig. 2 nach rechts verlagert und verschiebt die Bremsbeläge 126 und 128 in herkömmlicher Weise aufeinander zu, so dass diese auf die Bremsscheibe drücken. Der Hydraulikdruck in der Fluidkammer 116 wird ausgehend von dem Wert p₀ (0 bar) auf den Wert p₁ erhöht (beispielsweise 160 bar). Dadurch wird der Bremskolben 114 derart stark in Fig. 2 nach rechts gedrückt, dass an der Bremsscheibe eine Klemmkraft F₁ entsteht. Der Hydraulikdruck in der Fluidkammer 116 wird weiter auf dem Wert p₁ gehalten.

Zum Zeitpunkt t₂ wird der Hubmagnet 166 aktiviert, so dass der Rastzapfen 168 mit der Rastverzahnung 164 in Eingriff gebracht wird. Eine Drehung der Rastscheibe 162 und damit des gesamten Planetengetriebes 148 wird somit blockiert. Dadurch wird auch eine Verlagerung des Bremskolbens 114 in dem Gehäuse 112 blockiert. Nun wird aus der Fluidkammer 116 zum Zeitpunkt t₃ Hydraulikfluid abgeführt, so dass der in der Fluidkammer 116 herrschende Druck vom Wert p₁ auf den Wert p₀ abfällt, welchen er zum Zeitpunkt t₅ erreicht. Aufgrund der Reduzierung des in der Fluidkammer 116 herrschenden Hydraulikdrucks bewegt sich der Bremskolben 114 geringfügig in Fig. 2 nach links in Richtung zu seiner Ausgangsstellung. Dabei wird die auf die Bremsscheibe wirkende Klemmkraft reduziert, d.h. sie fällt von dem Wert F₁ auf den Wert F₂ ab. Dies ist mit auftretenden mechanischen Setzvorgängen zu erklären. Insbesondere ist dies damit zu erklären, dass sich aufgrund der geringen Axialbewegung des Bremskolbens 114 in Fig. 2 nach links das Blockierelement 134 angetrieben über die Gewindepaarung des Gewindebolzens 130 und des Blockierelements 134 geringfügig verdrehen kann, bis die Rastverzahnung 164 mit dem Rastzapfen 168 in selbsthemmenden Eingriff gelangt. Ist dieser Zustand erreicht, so wird eine weitere Drehung des Blockierelements 134 um die Kolbenlängsachse A durch den gegenseitigen Eingriff von Rastverzahnung 164 und Rastzapfen 168 blockiert. Dieser Zustand ist zum Zeitpunkt t₄ erreicht. Der Bremskolben 114 ist in diesem Zustand in seiner Axialstellung innerhalb des Gehäuses 112 arretiert.

Wenn der selbsthemmende Eingriff von Rastverzahnung 164 und Rastzapfen 168 hergestellt ist, kann auch das Bestromen des Hubmagneten 166 aufgehoben werden.

In diesem Zustand ist das Blockierelement 134 gegen eine Drehung in die Kolbenlängsachse A blockiert. Die Bremsbeläge 126 und 128 drücken mit der Klemmkraft F₂ auf die Bremsscheibe. Die Feststellbremsfunktion ist aktiviert.

Zum Lösen der Feststellbremsfunktion wird zu einem Zeitpunkt t₆ über die Hydraulikfluidleitung der Fluidkammer 116 Hydraulikfluid zugeführt und der Hydraulikdruck in der Fluidkammer 116 von dem Wert p₀ auf den Wert p₁ angehoben. Dabei steigt die Klemmkraft ausgehend von dem Wert F₂ auf den Klemmkraftwert F₃ an. Der Bremskolben 114 wird mechanisch von der Blockiereinrichtung 134 entkoppelt. Dadurch verdreht sich die Blockiereinrichtung 134 geringfügig, was dazu führt, dass die Rastverzahnung 164 und der Rastzapfen 168 aus ihrem selbsthemmenden Eingriff austreten können, gedrängt durch die auf den Rastzapfen 168 wirkende Vorspannung. Dadurch wird das Blockierelement 134 durch das Planetengetriebe 148 nicht weiter blockiert und lässt sich innerhalb des Gehäuses 112 drehen. In der Folge kann aus der Fluidkammer 116 zum Zeitpunkt t₁₀ Hydraulikfluid abgeführt werden bis der darin herrschende Hydraulikdruck von dem Wert p₁ auf den Wert p₀ abfällt. Parallel fällt die über die Bremsbeläge 126 und 128 übertragene Klemmkraft auf den Wert F₀ ab, so dass die Fahrzeugbremse 110 wieder ihren in Fig. 2 gezeigten bremswirkungslosen Ausgangszustand einnimmt.

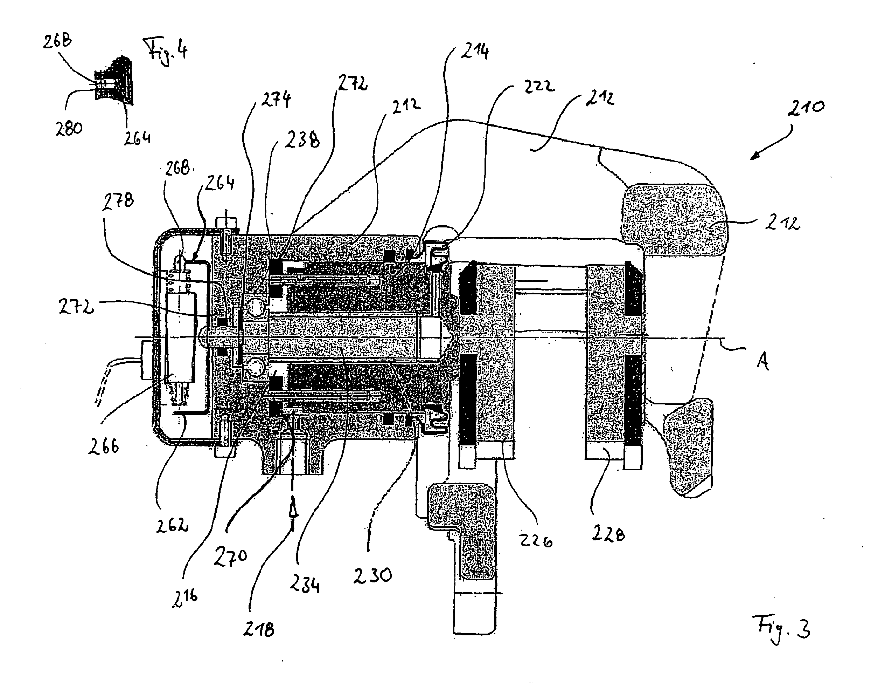

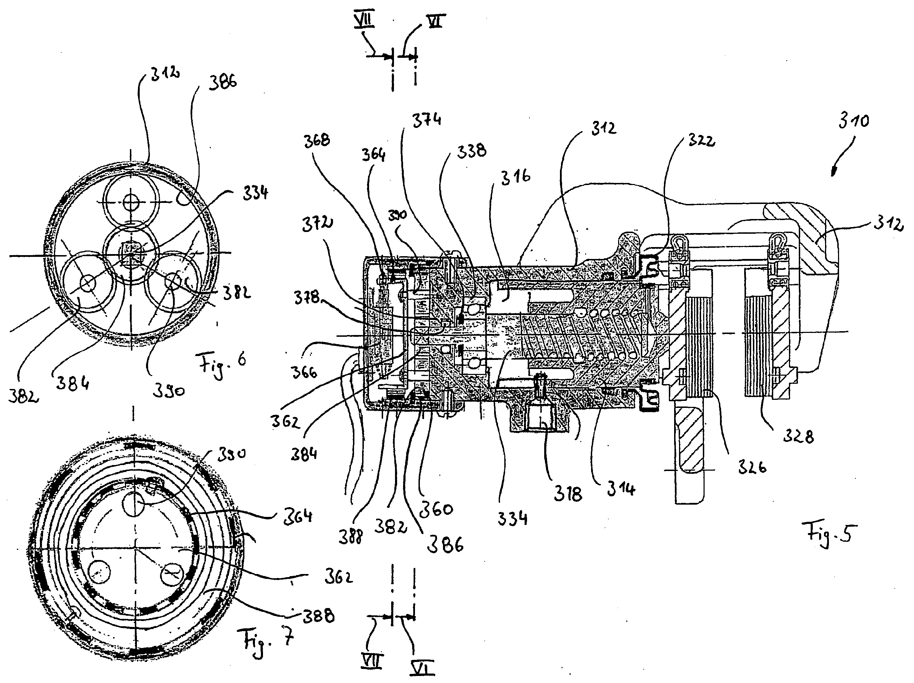

In Fig. 3 und 4 ist ein drittes Ausführungsbeispiel der Erfindung gezeigt. Dieses ist ähnlich zu dem zweiten Ausführungsbeispiel gemäß Fig. 2. Im Folgenden werden daher lediglich die Unterschiede zu dem Ausführungsbeispiel gemäß Fig. 2 beschreiben, wobei für gleichartige oder gleich wirkende Komponenten dieselben Bezugszeichen wie bei der Beschreibung des zweiten Ausführungsbeispiels verwendet werden, jedoch mit der Ziffer "2" vorangestellt.

Ein Unterschied besteht darin, dass das Blockierelement 234 mit einem Gewindebolzen 230 ausgeführt ist, der unter Ausbildung einer selbstlösenden Gewindepaarung in einem in dem Bremskolben 214 ausgebildeten Innengewinde aufgenommen ist.

Der Bremskolben 214 ist über an dem Gehäuse 212 festgelegte Führungszapfen 270 drehfest in dem Gehäuse 212 geführt. Figur 2 zeigt auch die Hydraulikfluid-Zuführleitung 218.

Das Blockierelement 234 ist über die Lageranordnung 238 um die Kolbenlängsachse A drehbar in dem Gehäuse 212 gelagert. Die Lageranordnung 238 ist über ein Kolbendämpfungselement 274 und einen Sicherungsring 276 axial gesichert. Das Blockierelement 234 erstreckt sich durch einen Wandabschnitt 272, in dem es über ein Dichtelement 278 fluiddicht geführt ist. An seinem in Fig. 3 linken Ende ist an dem Blockierelement 234 eine Rastscheibe 262 drehfest angebracht. Die Rastscheibe 262 ist napfförmig ausgebildet und weist an ihrem radialen Umfangsbereich eine Rastverzahnung 264 mit Ausnehmungen 280 auf, in die ein Rastzapfen 268 eines Hubmagneten 266 bei Aktivierung des Hubmagneten 266 eingreifen kann. Über den Umfang der Rastscheibe 262 ist eine Vielzahl von derartigen Ausnehmungen 280 vorgesehen.

Im Betrieb funktioniert die Fahrzeugbremse 210 analog zu der Fahrzeugbremse 110 aus Fig. 2, wobei durch das Fehlen des Planetengetriebes höhere Kräfte auf den Rastzapfen 268 wirken. Es gilt ebenso das bezüglich der Fig. 10 Gesagte auch für die Fahrzeugbremse 210. Es ist noch anzumerken, dass bei einer sehr feinen Teilung der Rastscheibe 262 mit Ausnehmungen 280 die bei der Beschreibung in Fig. 10 angesprochenen Setzvorgänge minimiert werden können und somit der Abfall der Klemmkraft von F₁ auf F₂ betragsmäßig klein gehalten werden kann.

In Fig. 5 bis 7 ist eine vierte Ausführungsform der erfindungsgemäßen Fahrzeugbremse gezeigt und allgemein mit 310 bezeichnet. Dieses ist ähnlich zu dem zweiten und dritten Ausführungsbeispiel gemäß Fig. 2 bis 4. Im Folgenden werden daher lediglich die Unterschiede zu den Ausführungsbeispielen gemäß Fig. 2 bis 4 beschreiben, wobei für gleichartige oder gleich wirkende Komponenten dieselben Bezugszeichen wie bei der Beschreibung der vorangehenden Ausführungsbeispiele verwendet werden, jedoch mit der Ziffer "3" vorangestellt.

In dem vierten Ausführungsbeispiel gemäß Fig. 5 bis 7 ist das Blockierelement 334 wiederum über ein Planetengetriebe 360 mit der Rastscheibe 362 gekoppelt. Das Planetengetriebe 360 umfasst ein drehfest auf dem Blockierelement angebrachtes Sonnenrad 384, drei mit diesem kämmende Planetenräder 382, die drehbar an der als Planetenträger wirkenden Rastscheibe 362 über Lagerbolzen 390 gelagert sind, und ein drehfest in dem Gehäuse 312 angebrachtes Sonnenrad 386, mit welchem die Planetenräder 382 kämmen.

Eine weitere Besonderheit des vierten Ausführungsbeispiels gemäß Fig. 5 bis 7 liegt darin, dass die Rastscheibe 362 über eine Spiralfeder 388 mit dem Gehäuse 312 verbunden ist. Die Spiralfeder 388 wird gespannt, wenn der Bremskolben 314 auf die nicht gezeigte Bremsscheibe zu verlagert wird und baut dabei eine Rückstellkraft auf, die bei Freigabe des Bremskolbens 314 diesen aktiv in seine in Fig. 5 gezeigte Ausgangslage zurückführt.

Ansonsten ist die Fahrzeugbremse 312 wie die vorstehend beschriebenen hydraulisch betätigten Ausführungsbeispiele, insbesondere wie in Fig. 3 gezeigt, ausgeführt und funktioniert dementsprechend.

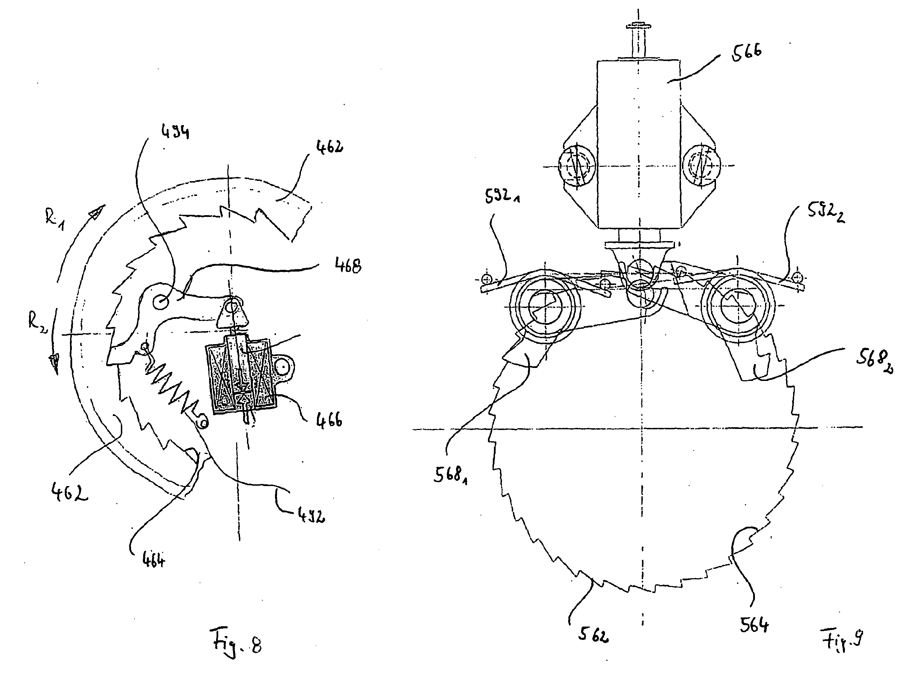

In Fig. 8 ist im Detail eine mögliche erfindungsgemäße Verrastungsanordnung gezeigt. Bei dieser wird eine Sperrklinke 468, welche dort in dem nicht gezeigten Gehäuse über einen Bolzen 494 drehbar gelagert ist, mittels einer Feder 492 in eine in Fig. 8 nicht gezeigte Freigabestellung vorgespannt. Über den Hubmagneten 466, lässt sich die Sperrklinke 468 entgegen der Federwirkung der Feder 492 in seine in Fig. 8 gezeigte Sperrstellung verlagern, in welcher sie mit einer Innenverzahnung 464 des Rastscheibe 462 in Eingriff steht und diese gegen eine Drehung in Richtung Drehrichtung R₁ blockiert. Diese Drehrichtung R₁ entspricht einem Lösen der Bremswirkung. Eine Drehung in entgegengesetzter Drehrichtung R₂, d.h. ein weiteres Zustellen der Bremse, ist jedoch möglich. Beim Lösen der Verrastung muss lediglich die Rastscheibe 462 geringfügig in Richtung R₂ verdreht werden, so dass die Sperrklinke freigegeben wird und durch die Feder 492 in ihre rastwirkungsfreie Freigabestellung zurück bewegt wird. Demnach ist zum Lösen der Verrastung ein Aktivieren des Hubmagneten 466 nicht mehr erforderlich.

In Fig. 9 ist im Detail eine alternative erfindungsgemäße Verrastungsanordnung gezeigt. Diese umfasst zwei Sperrklinken 568₁ und 568₂, die jeweils über diesen zugeordnete Federn 592₁ und 592₂ in ihre Freigabestellung vorgespannt sind. Beide Sperrklinken 568₁ und 568₂ werden über ein und denselben Hubmagneten 566 betätigt. Allerdings sind die Sperrklinken 568₁ und 568₂ derart in Abstimmung auf die Teilung der Innenverzahnung 564 angeordnet und dimensioniert, dass immer nur eine der Sperrklinken 568₁ und 568₂ in selbsthemmendem Eingriff mit einem der Zähne der Innenverzahnung 564 steht und die jeweils andere der Sperrklinken 568₁ und 568₂ dann zwischen zwei benachbarten Zähnen der Innenverzahnung 564 liegt. Dadurch können trotz einer verhältnismäßig groben Teilung der Innenverzahnung 564 hinreichend fein Raststellungen bereitgestellt werden.

## Patentansprüche

1. Fahrzeugbremse (10; 110; 210; 310) mit
- einem Gehäuse (12; 112; 212; 312),
- einem in dem Gehäuse (12; 112; 212; 312) aufgenommenen Bremskolben (70; 114; 214; 314), an dem ein Bremsbelag (16; 126; 226; 326) angebracht ist, und
- einer Blockiereinrichtung,
wobei der Bremskolben (70; 114; 214; 314) in dem Gehäuse (12; 112; 212; 312) über eine Betätigungseinrichtung verlagerbar ist und wobei der Bremskolben (70; 114; 214; 314) vermittels der Blockiereinrichtung bezüglich des Gehäuses (12; 112; 212; 312) arretierbar ist,
wobei die Blockiereinrichtung eine elektromechanische Verriegelungsanordnung aufweist, welche derart betätigbar ist, dass sie in einer Verrastungsstellung eine Verlagerung des Bremskolbens (70; 114; 214; 314) innerhalb des Gehäuses (12; 112; 212; 312) blockiert und in einer Freigabestellung den Bremskolben (70; 114; 214; 314) für eine Bewegung in dem Gehäuse freigibt,
wobei weiter die Verrastungsanordnung eine Rastelementanordnung (82; 168; 268; 368; 468; 568) mit wenigstens einem zwischen einer der Verriegelungsstellung zugeordneten Rastelementposition und einer der Freigabestellung zugeordneten Rastelementposition verlagerbaren Rastelement (82;168; 268; 368; 468; 568) aufweist,
**dadurch gekennzeichnet, dass** das wenigstens eine Rastelemente (82; 168; 268; 368; 468; 568) in seine der Freigabestellung zugeordnete Rastelementposition über ein Federelement (492; 592) vorgespannt ist.

2. Fahrzeugbremse (10; 110; 210; 310) nach Anspruch 1,
**dadurch gekennzeichnet, dass** das Rastelement (82; 168; 268; 368; 468; 568) durch selbsthemmenden Eingriff mit einer Rastelement-Angriffsfläche (78; 164; 264; 364; 464; 564) einer mit dem Bremskolben (70; 114; 214; 314) antriebsmäßig gekoppelten Gegenrastkomponente (34; 162; 262; 362; 462) verrastbar ist.

3. Fahrzeugbremse (10; 110; 210; 310) nach Anspruch 2,
**dadurch gekennzeichnet, dass** das wenigstens eine Rastelement (82; 168; 268; 368; 468; 568) über einen elektromechanischen Aktuator (80; 166; 266; 366; 466; 566) zwischen seiner der Verriegelungsstellung zugeordneten Rastelementposition und seiner der Freigabestellung zugeordneten Rastelementposition verlagerbar ist.

4. Fahrzeugbremse (10; 110; 210; 310) nach einem der Ansprüche 1 bis 3,
**dadurch gekennzeichnet, dass** zwei Rastelemente (568₁, 568₂) über den elektromechanischen Aktuator (566) betätigbar sind, wobei der Abstand zwischen den Rastelementen (568₁; 568₂) und die Teilung der mit einer Mehrzahl von Rastelement-Angriffsflächen (564) ausgebildeten Gegenrastkomponente (562) derart aufeinander abgestimmt sind, dass in der Verriegelungsstellung lediglich eines der Rastelemente (568₁, 568₂) mit einer der Rastelement-Angriffsflächen (564) in selbsthemmendem Eingriff steht und das jeweils andere Rastelement (568₁ 568₂) dabei zwischen zwei benachbarte Rastelement-Angriffsflächen (564) selbsthemmungsfrei eingreift

5. Fahrzeugbremse (10; 110; 210; 310) nach einem der Ansprüche 1 bis 4,
**dadurch gekennzeichnet, dass** das wenigstens eine Rastelement (468; 568) von einer Sperrklinke (468; 568) gebildet ist und dass die Rastelement-Angriffsflächen (464; 564) der Gegenrastkomponente (462; 562) als Rastverzahnung ausgebildet sind.

6. Fahrzeugbremse (10; 110; 210; 310) nach einem der Ansprüche 1 bis 4,
**dadurch gekennzeichnet, dass** das wenigstens eine Rastelement (82; 168; 268; 368) von einem Rastzapfen (82; 168; 268; 368) gebildet ist und dass Rastelement-Angriffsflächen (78; 164; 264; 364) der Gegenrastkomponente (34; 162; 262; 362) als Rastzapfenausnehmungen ausgebildet sind.

7. Fahrzeugbremse (10; 110; 210; 310) nach einem der vorangehenden Ansprüche,
**dadurch gekennzeichnet, dass** der Bremskolben (70;114; 214; 314) mit einem Blockierelement (64; 34; 134; 234; 334) der Blockiereinrichtung über eine selbstlösende Gewindepaarung gekoppelt ist.

8. Fahrzeugbremse (110) nach Anspruch 7,
**dadurch gekennzeichnet, dass** die selbstlösende Gewindepaarung von einem Außengewinde, das an einem an dem Bremskolben (114) befestigten Gewindebolzen (130) vorgesehen ist, und einem Innengewinde gebildet ist, das an einer an dem Blockierelement (134) befestigten Aufnahmebuchse vorgesehen ist.

9. Fahrzeugbremse (10; 210; 310) nach Anspruch 7,
**dadurch gekennzeichnet, dass** die selbstlösende Gewindepaarung von einem an dem Bremskolben (70; 214; 314) vorgesehenen Innengewinde und einem an dem Blockierelement (64; 234; 334) vorgesehenen Außengewinde gebildet ist.

10. Fahrzeugbremse (10; 110; 310) nach einem der Ansprüche 7 bis 9,
**dadurch gekennzeichnet, dass** das Blockierelement (64; 134; 334) über eine Getriebeeinrichtung, insbesondere ein Planetengetriebe (46; 148; 360), mit der Gegenrastkomponente (34; 162; 362; 462) antriebsmäßig gekoppelt ist.

11. Fahrzeugbremse (310) nach Anspruch 10,
**dadurch gekennzeichnet, dass** das Blockierelement (334) mit einem Sonnenrad (384) des Planetengetriebes (360) drehfest gekoppelt ist, dass ferner die Gegenrastkomponente (362) mit einem Planetenradträger des Planentengetriebes (360) drehfest gekoppelt ist und dass das Hohlrad (386) des Planentengetriebes (360) in dem Gehäuse (312) ausgebildet oder mit diesem drehfest gekoppelt ist.

12. Fahrzeugbremse (10; 110) nach Anspruch 10,
**dadurch gekennzeichnet, dass** das Blockierelement (66; 134) als Planetenradträger ausgebildet oder mit einem Planetenradträger des Planetengetriebes drehfest gekoppelt ist, dass ferner die Gegenrastkomponente (34; 162) mit einem Sonnenrad (42; 160) des Planentengetriebes drehfest gekoppelt ist und dass das Hohlrad (56; 152) des Planentengetriebes in dem Gehäuse (12; 112) ausgebildet oder mit diesem drehfest gekoppelt ist.

13. Fahrzeugbremse (10; 110) nach einem der Ansprüche 10 bis 12,
**dadurch gekennzeichnet, dass** das Planetengetriebe (46; 148) mehrstufig ausgebildet ist.

14. Fahrzeugbremse (110; 210; 310) nach einem der vorangehenden Ansprüche,
**dadurch gekennzeichnet, dass** die Betätigungseinrichtung hydraulisch ausgebildet ist, wobei der Bremskolben (114; 214; 314) mit dem Gehäuse (112; 212; 312) eine Fluidkammer (16; 216; 316) begrenzt, welche über einen Hydraulikfluidkreis mit Hydraulikfluid beschickbar ist, so dass der Bremskolben (114; 214; 314) zur Betätigung der Fahrzeugbremse (110; 210; 310) hydraulisch innerhalb des Gehäuses (112; 212; 312) entlang einer Kolbenlängsachse (A) verlagerbar ist.

15. Fahrzeugbremse (10) nach einem der Ansprüche 1 bis 13,
**dadurch gekennzeichnet, dass** die Betätigungseinrichtung elektromechanisch ausgebildet ist, wobei der Bremskolben (14) zur Betätigung der Fahrzeugbremse (10) durch Ansteuerung eines Elektromotors innerhalb des Gehäuses (12) entlang einer Kolbenlängsachse (A) verlagerbar ist.

16. Fahrzeugbremse (10; 210; 310) nach einem der vorangehenden Ansprüche,
**dadurch gekennzeichnet, dass** das Blockierelement (64; 234; 334) über eine Radiallageranordnung (68; 238; 338) in dem Gehäuse (12; 212; 312) drehbar gelagert ist.

17. Fahrzeugbremse (110) nach einem der vorangehenden Ansprüche,
**dadurch gekennzeichnet, dass** das Blockierelement (134) über eine Axiallageranordnung (138) in dem Gehäuse (112) drehbar gelagert ist.

18. Fahrzeugbremse (10; 110; 210; 310) nach einem der vorangehenden Ansprüche,
**dadurch gekennzeichnet, dass** in einer Betriebsbremssituation der Bremskolben (70; 114; 214; 314) durch Aktivieren der Betätigungseinrichtung innerhalb des Gehäuses (12; 112; 212; 312) verlagerbar ist und dass in einer Parkbremssituation zunächst der Bremskolben (70; 114; 214; 314) durch Aktivieren der Betätigungseinrichtung innerhalb des Gehäuses (12; 112; 212; 312) verlagert wird, sodann die Blockiereinrichtung betätigt wird und der Bremskolben (70; 114; 214; 314) innerhalb des Gehäuses (12; 112; 212; 312) blockiert wird und schließlich die Betätigungseinrichtung deaktiviert wird.

19. Fahrzeugbremse (10; 110; 210; 310) nach Anspruch 18,
**dadurch gekennzeichnet, dass** zum Auflösen der Parkbremssituation die Betätigungseinrichtung aktiviert wird, bis das Blockierelement (64; 234; 334; 434) den Bremskolben (70; 114; 214; 314) freigibt und schließlich der Bremskolben (70; 114; 214; 314) in seine bremswirkungsfreie Ausgangsstellung zurückgeführt wird.

20. Verfahren zum Betätigen einer Fahrzeugbremse (10; 110; 210; 310) nach einem der vorangehenden Ansprüche,
**dadurch gekennzeichnet, dass** in einer Betriebsbremssituation der Bremskolben (70; 114; 214; 314) durch Aktivieren der Betätigungseinrichtung innerhalb des Gehäuses (12; 112; 212; 312) verlagerbar ist und dass in einer Parkbremssituation zunächst der Bremskolben (70; 114; 214; 314) durch Aktivieren der Betätigungseinrichtung innerhalb des Gehäuses (12; 112; 212; 312) verlagert wird, sodann die Blockiereinrichtung betätigt wird und der Bremskolben (70;114; 214; 314) innerhalb des Gehäuses (12; 112; 212; 312) blockiert wird und schließlich die Betätigungseinrichtung deaktiviert wird.

21. Verfahren nach Anspruch 20,
**dadurch gekennzeichnet, dass** zum Auflösen der Parkbremssituation die Betätigungseinrichtung aktiviert wird, bis das Blockierelement (64; 234; 334; 434) den Bremskolben (70; 114; 214; 314) freigibt und schließlich der Bremskolben (70; 114; 214; 314) in seine bremswirkungsfreie Ausgangsstellung zurückgeführt wird.

## Claims

1. Vehicle brake (10; 110; 210; 310) comprising
- a housing (12; 112; 212; 312),
- a brake piston (70; 114; 214; 314), which is accommodated in the housing (12; 112; 212; 312) and on which a brake lining (16; 126; 226; 326) is fitted, and
- a blocking device,
wherein the brake piston (70; 114; 214; 314) is displaceable in the housing (12; 112; 212; 312) by means of an actuating device and wherein the brake piston (70; 114; 214; 314) is securable relative to the housing (12; 112; 212; 312) by means of the blocking device,
wherein the blocking device comprises an electromechanical locking arrangement, which is actuable in such a way that in a latching position it prevents a displacement of the brake piston (70; 114; 214; 314) inside the housing (12; 112; 212; 312) and in a release position it enables a movement of the brake piston (70; 114; 214; 314) in the housing,
wherein moreover the latching arrangement comprises a detent element arrangement (82; 168; 268; 368; 468; 568) comprising at least one detent element (82; 168; 268; 368; 468; 568), which is displaceable between a detent element position associated with the locking position and a detent element position associated with the release position,
**characterized in that** the at least one detent element (82; 168; 268; 368; 468; 568) is biased into its detent element position associated with the release position by means of a spring element (492; 592).

2. Vehicle brake (10; 110; 210; 310) according to claim 1,
**characterized in that** the detent element (82; 168; 268; 368; 468; 568) is latchable through self-locking engagement with a detent-element working surface (78; 164; 264; 364; 464; 564) of a counterpart detent component (34; 162; 262; 362; 462) drive-connected to the brake piston (70; 114; 214; 314).

3. Vehicle brake (10; 110; 210; 310) according to claim 2,
**characterized in that** the at least one detent element (82; 168; 268; 368; 468; 568) is displaceable between its detent element position associated with the locking position and its detent element position associated with the release position by means of an electromechanical actuator (80; 166; 266; 366; 466; 566).

4. Vehicle brake (10; 110; 210; 310) according to one of claims 1 to 3,
**characterized in that** two detent elements (568₁, 568₂) are actuable by means of the electromechanical actuator (566), wherein the distance between the detent elements (568₁, 568₂) and the pitch of the counterpart detent component (562) designed with a plurality of detent-element working surfaces (564) are tuned in such a way to one another that in the locking position only one of the detent elements (568₁, 568₂) is in self-locking engagement with one of the detent-element working surfaces (564) and the, in each case, other detent element (568₁, 568₂) in said case engages without self-locking between two adjacent detent-element working surfaces (564).

5. Vehicle brake (10; 110; 210; 310) according to one of claims 1 to 4,
**characterized in that** the at least one detent element (468; 568) is formed by a pawl (468; 568) and that the detent-element working surfaces (464; 564) of the counterpart detent component (462; 562) take the form of detent teeth.

6. Vehicle brake (10; 110; 210; 310) according to one of claims 1 to 4,
**characterized in that** the at least one detent element (82; 168; 268; 368) is formed by a detent pin (82; 168; 268; 368) and that detent-element working surfaces (78; 164; 264; 364) of the counterpart detent component (34; 162; 262; 362) take the form of detent-pin recesses.

7. Vehicle brake (10; 110; 210; 310) according to one of the preceding claims,
**characterized in that** the brake piston (70; 114; 214; 314) is connected to a blocking element (63; 34; 134; 234; 334) of the blocking device by a self-unlocking thread pairing.

8. Vehicle brake (110) according to claim 7,
**characterized in that** the self-unlocking thread pairing is formed by an external thread, which is provided on a threaded bolt (130) fastened to the brake piston (114), and by an internal thread, which is provided on a locating bush fastened to the blocking element (134).

9. Vehicle brake (10; 210; 310) according to claim 7,
**characterized in that** the self-unlocking thread pairing is formed by an internal thread, which is provided on the brake piston (70; 214; 314), and by an external thread, which is provided on the blocking element (64; 234; 334).

10. Vehicle brake (10; 110; 310) according to one of claims 7 to 9,
**characterized in that** the blocking element (64; 134; 334) is drive-connected by a gear device, in particular by a planetary gear (46; 148; 360), to the counterpart detent component (34; 162; 362; 462).

11. Vehicle brake (310) according to claim 10,
**characterized in that** the blocking element (334) is connected in a rotationally fixed manner to a sun wheel (384) of the planetary gear (360), that moreover the counterpart detent component (362) is connected in a rotationally fixed manner to a planet carrier of the planetary gear (360) and that the ring gear (386) of the planetary gear (360) is formed in or connected in a rotationally fixed manner to the housing (312).

12. Vehicle brake (10; 110) according to claim 10,
**characterized in that** the blocking element (66; 134) is designed as a planet carrier or is connected in a rotationally fixed manner to a planet carrier of the planetary gear, that moreover the counterpart detent component (34; 162) is connected in a rotationally fixed manner to a sun wheel (42; 160) of the planetary gear and that the ring gear (56; 152) of the planetary gear is formed in or connected in a rotationally fixed manner to the housing (12; 112).

13. Vehicle brake (10; 110) according to one of claims 10 to 12,
**characterized in that** the planetary gear (46; 148) is of a multi-step design.

14. Vehicle brake (110; 210; 310) according to one of the preceding claims,
**characterized in that** the actuating device is of a hydraulic design, wherein the brake piston (114; 214; 314) with the housing (112; 212; 312) delimits a fluid chamber (16; 216; 316), which is chargeable with hydraulic fluid via a hydraulic fluid circuit, so that for actuation of the vehicle brake (110; 210; 310) the brake piston (114; 214; 314) is displaceable hydraulically inside the housing (112; 212; 312) along a piston longitudinal axis (A).

15. Vehicle brake (10) according to one of claims 1 to 13,
**characterized in that** the actuating device is of an electromechanical design, wherein for actuation of the vehicle brake (10) the brake piston (14) is displaceable inside the housing (12) along a piston longitudinal axis (A) through activation of an electric motor.

16. Vehicle brake (10; 210; 310) according to one of the preceding claims,
**characterized in that** the blocking element (64; 234; 334) is rotatably supported in the housing (12; 212; 312) by means of a radial bearing arrangement (68; 238; 338).

17. Vehicle brake (110) according to one of the preceding claims,
**characterized in that** the blocking element (134) is rotatably supported in the housing (112) by means of a thrust bearing arrangement (138).

18. Vehicle brake (10; 110; 210; 310) according to one of the preceding claims,
**characterized in that** in a service braking situation the brake piston (70; 114; 214; 314) is displaceable inside the housing (12; 112; 212; 312) by activating the actuating device and that in a parking braking situation first the brake piston (70; 114; 214; 314) is displaced inside the housing (12; 112; 212; 312) by activating the actuating device, then the blocking device is actuated and the brake piston (70; 114; 214; 314) is blocked inside the housing (12; 112; 212; 312) and finally the actuating device is deactivated.

19. Vehicle brake (10; 110; 210; 310) according to claim 18,
**characterized in that** for cancelling the parking braking situation the actuating device is activated until the blocking element (64; 234; 334; 434) releases the brake piston (70; 114; 214; 314) and finally the brake piston (70; 114; 214; 314) is returned to its braking-effect-free basic position.

20. Method of actuating a vehicle brake (10; 110; 210; 310) according to one of the preceding claims,
**characterized in that** in a service braking situation the brake piston (70; 114; 214; 314) is displaceable inside the housing (12; 112; 212; 312) by activating the actuating device and that in a parking braking situation first the brake piston (70; 114; 214; 314) is displaced inside the housing (12; 112; 212; 312) by activating the actuating device, then the blocking device is actuated and the brake piston (70; 114; 214; 314) is blocked inside the housing (12; 112; 212; 312) and finally the actuating device is deactivated.

21. Method according to claim 20,
**characterized in that** for cancelling the parking braking situation the actuating device is activated until the blocking element (64; 234; 334; 434) releases the brake piston (70; 114; 214; 314) and finally the brake piston (70; 114; 214; 314) is returned to its braking-effect-free basic position.

## Revendications

1. Frein automobile (10 ; 110 ; 210 ; 310) comportant
- un carter (12 ; 112; 212; 312),
- un piston de frein (70 ; 114 ; 214 ; 314) logé dans le carter (12 ; 112 ; 212 ; 312) et portant une garniture de frein (16 ; 126 ; 226 ; 326), et
- un dispositif de blocage,
le piston de frein (70 ; 114 ; 214 ; 314) pouvant être déplacé dans le carter (12 ; 112 ; 212 ; 312) par l'intermédiaire d'un dispositif d'actionnement et bloqué dans ledit carter (12 ; 112 ; 212 ; 312) par l'intermédiaire du dispositif de blocage,
le dispositif de blocage présentant un ensemble de verrouillage électromécanique qui peut être actionné de manière à bloquer le déplacement du piston de frein (70 ; 114 ; 214 ; 314) dans le carter (12 ; 112 ; 212 ; 312) dans une position d'encliquetage et à libérer le piston de frein (70 ; 114 ; 214 ; 314) pour permettre son déplacement dans le carter dans une position de libération,
et le dispositif d'encliquetage présentant en outre un ensemble d'éléments d'encliquetage (82 ; 168 ; 268 ; 368 ; 468 ; 568) comportant au moins un élément d'encliquetage (82 ; 168 ; 268 ; 368 ; 468 ; 568) déplaçable entre une position d'élément d'encliquetage associée à la position de verrouillage et une position d'élément d'encliquetage associée à la position de libération,
**caractérisé en ce qu'**au moins un élément d'encliquetage (82 ; 168 ; 268 ; 368 ; 468 ; 568) est précontraint par l'intermédiaire d'un élément ressort (492 ; 592) dans sa position d'élément d'encliquetage associée à la position de libération.

2. Frein automobile (10 ; 110 ; 210 ; 310) selon la revendication 1,
**caractérisé en ce que** l'élément d'encliquetage (82 ; 168 ; 268 ; 368 ; 468 ; 568) peut être enclenché par prise autobloquante avec une surface d'attaque (78 ; 164 ; 264 ; 364 ; 464 ; 564) d'un composant d'encliquetage opposé (34 ; 162 ; 262 ; 362 ; 462) couplé en entraînement avec le piston de frein (70 ; 114 ; 214 ; 314).

3. Frein automobile (10 ; 110 ; 210 ; 310) selon la revendication 2,
**caractérisé en ce qu'**au moins un élément d'encliquetage (82 ; 168 ; 268 ; 368 ; 468 ; 568) peut être déplacé par l'intermédiaire d'un actionneur électromécanique (80 ; 166 ; 266 ; 366 ; 466 ; 566) entre sa position d'élément d'encliquetage associée à la position de verrouillage et sa position d'élément d'encliquetage associée à la position de libération.

4. Frein automobile (10 ; 110 ; 210 ; 310) selon l'une des revendications 1 à 3,
**caractérisé en ce que** deux éléments d'encliquetage (568₁, 568₂) sont actionnables par l'intermédiaire de l'actionneur électromécanique (566), l'écart entre les éléments d'encliquetage (568₁, 568₂) et la division du composant d'encliquetage opposé (562) par une pluralité de surfaces d'attaque (564) sont adaptés l'un à l'autre de telle manière que, dans la position de verrouillage, uniquement un des éléments d'encliquetage (568₁, 568₂) est en prise autobloquante avec une des surfaces d'attaque (564) et l'autre élément d'encliquetage (568₁, 568₂) vient ce faisant en prise non autobloquante entre deux surfaces d'attaque (564) voisines.

5. Frein automobile (10 ; 110 ; 210 ; 310) selon l'une des revendications 1 à 4,
**caractérisé en ce qu'**au moins un élément d'encliquetage (468 ; 568) est constitué par un cliquet d'arrêt (468 ; 568) et **en ce que** les surfaces d'attaque (464 ; 564) du composant d'encliquetage opposé (462 ; 562) sont conçues comme une denture d'encliquetage.

6. Frein automobile (10 ; 110 ; 210 ; 310) selon l'une des revendications 1 à 4,
**caractérisé en ce qu'**au moins un élément d'encliquetage (82 ; 168 ; 268 ; 368) est constitué par un tenon d'encliquetage (82 ; 168 ; 268 ; 368) et **en ce que** les surfaces d'attaque (78 ; 164 ; 264 ; 364) du composant d'encliquetage opposé (34 ; 162 ; 262 ; 362) sont conçues comme des réservations destinées à recevoir les tenons d'encliquetage.

7. Frein automobile (10 ; 110 ; 210 ; 310) selon l'une des revendications précédentes,
**caractérisé en ce que** le piston de frein (70 ; 114 ; 214 ; 314) est couplé avec un élément de blocage (64 ; 34 ; 134 ; 234 ; 334) du dispositif de blocage par l'intermédiaire d'un appariement de filetages à déblocage automatique.

8. Frein automobile (110) selon la revendication 7,
**caractérisé en ce que** l'appariement de filetages à déblocage automatique est constitué d'un filetage externe prévu sur un boulon fileté (130) fixé sur le piston de frein (114) et d'un filetage interne prévu sur une douille de logement fixée sur l'élément de blocage (134).

9. Frein automobile (10 ; 210 ; 310) selon la revendication 7,
**caractérisé en ce que** l'appariement de filetages à déblocage automatique est constitué d'un filetage interne prévu sur le piston de frein (70 ; 214 ; 314) et d'un filetage externe prévu sur l'élément de blocage (64 ; 234 ; 334).

10. Frein automobile (10 ; 110 ; 210 ; 310) selon l'une des revendications 7 à 9,
**caractérisé en ce que** l'élément de blocage (64 ; 134 ; 334) est couplé en entraînement avec le composant d'encliquetage opposé (34 ; 162 ; 362 ; 462) par l'intermédiaire d'un dispositif d'engrenage, plus particulièrement par l'intermédiaire d'un engrenage planétaire (46 ; 148 ; 360).

11. Frein automobile (310) selon la revendication 10,
**caractérisé en ce que** l'élément de blocage (334) est couplé fixe en rotation avec une roue solaire (384) de l'engrenage planétaire (360), et **en ce qu'**en outre le composant d'encliquetage opposé (362) est couplé fixe en rotation avec un porte-satellites de l'engrenage planétaire (360) à l'intérieur du carter (312) et la couronne (386) de l'engrenage planétaire (360) est intégrée dans le carter (312) ou couplée fixe en rotation avec celui-ci.

12. Frein automobile (10 ; 110) selon la revendication 10,
**caractérisé en ce que** l'élément de blocage (66 ; 134) est conçu comme un porte-satellites ou couplé fixe en rotation avec un porte-satellites de l'engrenage planétaire, et **en ce qu'**en outre le composant d'encliquetage opposé (34 ; 162) est couplé fixe en rotation avec une roue solaire (42 ; 160) de l'engrenage planétaire et la couronne (56 ; 152) de l'engrenage planétaire est intégrée dans le carter (12 ; 112) ou couplée fixe en rotation avec celui-ci.

13. Frein automobile (10 ; 110) selon l'une des revendications 10 à 12,
**caractérisé en ce que** l'engrenage planétaire (46 ; 148) est conçu comme un engrenage à plusieurs étages.

14. Frein automobile (110 ; 210 ; 310) selon l'une des revendications précédentes,
**caractérisé en ce que** le dispositif d'actionnement est de conception hydraulique, le piston de frein (114 ; 214 ; 314) délimitant conjointement avec le carter (112 ; 212 ; 312) une chambre fluidique (16 ; 216 ; 316) laquelle peut être alimentée avec un fluide hydraulique par le biais d'un circuit de fluide hydraulique si bien que le piston de frein (114 ; 214 ; 314) peut être déplacé hydrauliquement à l'intérieur du carter (112 ; 212 ; 312), le long d'un axe longitudinal de piston (A), pour actionner le frein automobile (110 ; 210 ; 310).

15. Frein automobile (10 ; 110 ; 210 ; 310) selon l'une des revendications 1 à 13,
**caractérisé en ce que** le dispositif d'actionnement est de conception électromécanique, le piston de frein (14) pouvant être déplacé par commande d'un moteur électrique à l'intérieur du carter (12), le long d'un axe longitudinal de piston (A), pour actionner le frein automobile (10).

16. Frein automobile (10 ; 210 ; 310) selon l'une des revendications précédentes,
**caractérisé en ce que** l'élément de blocage (64 ; 234 ; 334) est monté mobile en rotation dans le carter (12 ; 212 ; 312) par l'intermédiaire d'un ensemble palier radial (68 ; 238 ; 338).

17. Frein automobile (110) selon l'une des revendications précédentes,
**caractérisé en ce que** l'élément de blocage (134) est monté mobile en rotation dans le carter (112) par l'intermédiaire d'un ensemble palier axial (138).

18. Frein automobile (10 ; 110 ; 210 ; 310) selon l'une des revendications précédentes,
**caractérisé en ce que**, en situation de freinage de service, le piston de frein (70 ; 114 ; 214 ; 314) peut être déplacé à l'intérieur du carter (12 ; 112 ; 212 ; 312) par activation du dispositif d'actionnement, et **en ce que**, en situation de freinage de stationnement, il y a tout d'abord déplacement du piston de frein (70 ; 114 ; 214 ; 314) à l'intérieur du carter (12 ; 112 ; 212 ; 312) par activation du dispositif d'actionnement, puis actionnement du dispositif de blocage et blocage du piston de frein (70 ; 114 ; 214 ; 314) à l'intérieur du carter (12 ; 112 ; 212 ; 312) et finalement désactivation du dispositif d'actionnement.

19. Frein automobile (10 ; 110 ; 210 ; 310) selon la revendication 18,
**caractérisé en ce que**, pour débloquer la situation de freinage de stationnement, le dispositif d'actionnement est activé jusqu'à ce que l'élément de blocage (64 ; 234 ; 334 ; 434) libère le piston de frein (70 ; 114 ; 214 ; 314) et le piston de frein (70 ; 114 ; 214 ; 314) est finalement ramené dans sa position de départ sans effet de freinage.

20. Procédé d'actionnement d'un frein automobile (10 ; 110 ; 210 ; 310) selon l'une des revendications précédentes,
**caractérisé en ce que**, en situation de freinage de service, le piston de frein (70 ; 114 ; 214 ; 314) peut être déplacé à l'intérieur du carter (12 ; 112 ; 212 ; 312) par activation du dispositif d'actionnement, et **en ce que**, en situation de freinage de stationnement, il y a tout d'abord déplacement du piston de frein (70 ; 114 ; 214 ; 314) à l'intérieur du carter (12 ; 112 ; 212 ; 312) par activation du dispositif d'actionnement, puis actionnement du dispositif de blocage et blocage du piston de frein (70 ; 114 ; 214 ; 314) à l'intérieur du carter (12 ; 112 ; 212 ; 312) et finalement désactivation du dispositif d'actionnement.

21. Procédé selon la revendication 20,
**caractérisé en ce que**, pour débloquer la situation de freinage de stationnement, le dispositif d'actionnement est activé jusqu'à ce que l'élément de blocage (64 ; 234 ; 334 ; 434) libère le piston de frein (70 ; 114 ; 214 ; 314) et le piston de frein (70 ; 114 ; 214 ; 314) est finalement ramené dans sa position de départ sans effet de freinage.
